# FASCICULE DE BREVET EUROPEEN

(11) **EP 4 162 848 B1**
(45) Date de publication et mention de la délivrance du brevet: **01.05.2024**
(21) Numéro de dépôt: 21201818.8
(22) Date de dépôt: 11.10.2021
(51) Int. Cl.: A47J 37/07, F23Q 7/02

(54) **ALLUME-FEU ÉLECTRIQUE**
ELEKTRISCHER FEUERANZÜNDER
ELECTRIC FIRE-LIGHTER

(43) Date de publication de la demande: 12.04.2023
(73) Titulaire: Barberet, Pierre, 90360 Lachapelle-sous-Rougemont (FR)
(72) Inventeur: Barberet, Pierre, 90360 Lachapelle-sous-Rougemont (FR)
(74) Mandataire: Burkard, Thierry

(56) Documents cités:
- EP-A1- 0 312 477
- CH-A- 338 283
- DE-A1-102011 113 818
- GB-A- 454 860
- GB-A- 869 766

## Description

La présente invention concerne un allume-feu électrique pour barbecues, cheminées à foyer ouvert, fourneaux à combustible solide ou similaires, comportant une structure sur laquelle est monté au moins un corps de chauffe tubulaire à résistance électrique ayant une face supérieure destinée à irradier sans contact direct le combustible pendant un temps suffisant pour en provoquer l'incandescence.

On connaît déjà divers systèmes de ce type, notamment par les demandes de brevet FR-A-2 465 455 et FR-A-2 465 953. Des allume-feu électriques décrits dans ces demandes de brevet sont fixés à demeure dans un foyer et comportent des résistances électriques blindées qui sont montées à nu à l'intérieur du foyer.

Aucune protection de ces résistances électriques n'est assurée et, lorsque les matériaux combustibles sont allumés, ces résistances sont soumises à la haute température dégagée par les flammes et les braises.

De nombreux essais ont démontré que malgré le blindage, les résistances électriques ont une durée de vie extrêmement brève et ne résistent pas plus de quelques heures aux contraintes thermiques auxquelles elles sont soumises dans ces conditions.

Par contre, si l'on enferme le corps de chauffe dans un boîtier protecteur perforé, comme le montre par exemple le document CH-A-338 283, le combustible ne peut pas être en contact direct avec le corps de chauffe et il ne s'enflamme que très difficilement, ce qui a empêché jusqu'à maintenant une large diffusion de ce genre d'appareils.

Le document CH 338283 décrit un allume-feu électrique composé d'un cadre en métal à l'intérieur duquel sont montés des tubes en matériaux réfractaires isolants, le cadre comportant une paroi de fermeture supérieure pour protéger les tubes en matériaux réfractaires avec des orifices d'air dans sa partie supérieure. Le cadre est fermé dans sa partie supérieure par la plaque ajourée et dans sa partie inférieure par une deuxième plaque ajourée de manière à former un logement pour ledit cadre.

La plaque supérieure est formée à partir d'une feuille métallique présentant des côtés obtenus par un premier pliage vers le bas et des rebords formés par un deuxième pliage vers l'intérieur, de manière à former un logement à l'intérieur duquel le cadre pourra coulisser, avant de refermer l'ensemble au moyen de la plaque inférieure.

Le document GB 454860 décrit un dispositif destiné à allumer de petites pièces de combustible tels que des morceaux de charbon de bois, composés d'une résistance électrique disposée entre des nervures transversales sur un bloc réfractaire comportant sur une de ses parois dites inférieures des pieds isolants thermiques et à son extrémité par laquelle arrive le câble d'alimentation électrique, et une poignée de préhension.

Pour tenter d'y remédier, le document DE-C-901 466 a proposé un allume-feu électrique en forme de grill formé essentiellement par un corps de chauffe tubulaire replié en plusieurs tronçons parallèles liés entre eux par des rangées de cales intermédiaires transversales.

Ce grill, muni d'une poignée, est destiné à être posé sur le fond du foyer tout en supportant le combustible à allumer, puis à être retiré dès que le feu a pris, afin d'éviter sa destruction.

Toutefois, le corps de chauffe est en contact direct au moins autant avec le foyer qu'avec le combustible, et aussi avec les cales intermédiaires, de sorte qu'une grande partie de la chaleur qu'il produit est dissipée inutilement et qu'il n'atteint pas une température assez élevée pour provoquer une inflammation rapide du combustible.

Les dispositifs allume-feu connus de l'art antérieur ne sont donc pas totalement efficaces dans la mesure où une partie de la chaleur générée par le corps de chauffe peut être dissipée et où leur durée de vie est limitée en raison des contraintes qu'ils subissent.

Notamment, lorsque le combustible est disposé directement sur le corps de chauffe, et en contact avec ce dernier, la pression exercée sur le dessus à raison du poids de ce combustible peut conduite le corps de chauffe à rentrer en contact avec la base de son support, de telle sorte qu'une partie de la chaleur générée ne sera pas utilisée pour provoquer l'incandescence du combustible mais sera dissipée vers le bas du dispositif.

Egalement, l'absence de ventilation peut contribuer à obérer les performances de l'allume feu et sa durée de vie.

La présente invention se propose de pallier à ces inconvénients en réalisant un allume-feu électrique très efficace, dont le corps de chauffe est susceptible de provoquer l'incandescence du combustible sans contact direct avec ce combustible, et soustrait aux contraintes thermiques régnant à l'intérieur d'un foyer en service.

Pour ce faire, l'allume-feu selon l'invention telle que définie dans la revendication des moyens destinés à empêcher que le combustible à enflammer, comme par exemple des pièces de bois, n'entre en contact avec le corps de chauffe.

Ce but est atteint par un allume-feu électrique comportant, en dessous du corps de chauffe, un support rigide agencé pour reposer sur une surface du foyer et pourvu de moyens permettant respectivement, de maintenir un espacement entre ladite surface et ledit support ou ladite surface, et entre ledit corps de chauffe et le combustible à enflammer.

De manière connue, la structure a une forme de pelle comprenant un manche et prolongé par le support rigide en forme de plaque d'appui, le corps de chauffe étant monté à une distance sensiblement constante de ladite plaque d'appui, laquelle est réalisée en un matériau réfractaire, le manche pouvant être réalisé en un matériau mauvais conducteur de la chaleur.

Pour assurer une efficacité maximale de l'allumage de combustible solide disposé sur le corps de chauffe, celui-ci a la forme d'une double boucle et présente avantageusement quatre segments rectilignes sensiblement parallèles entre eux.

La plaque d'appui comporte des retours latéraux qui la prolongent respectivement vers le bas et vers le haut.

Vu en section, la plaque d'appui a ainsi la forme d'un H.

Les deux retours latéraux inférieurs forment un piètement qui permet de maintenir une distance minimale entre le foyer et la plaque d'appui, pour permettre ainsi une circulation d'air qui permettra d'optimiser les performances d'allumage du dispositif.

Les deux retours latéraux supérieurs permettent de positionner transversalement des éléments de combustibles à enflammer sans que ceux-ci ne reposent directement sur le corps de chauffe, empêchant ainsi que leur poids ne vienne provoquer un déplacement vers le bas dudit corps de chauffe, qui ne sera jamais en contact avec les pièces de combustible.

La combinaison de ces deux modalités permet d'optimiser les performances de l'allume-feu, en rendant possible l'allumage du combustible sous un intervalle de temps beaucoup plus réduit qu'avec les dispositifs connus de l'art antérieur, et avec une efficacité maximale du fait de la circulation d'air qui est assurée de part et d'autre du corps de chauffe.

La présente invention sera mieux comprise en référence à la description d'un exemple de réalisation illustré par les dessins annexés, dans lesquels :
[Fig 1] représente une vue latérale en élévation d'une forme de réalisation de l'allume-feu électrique selon l'invention,
[Fig 2] représente une vue de dessus en perspective de l'allume-feu illustré par la figure 1,
[Fig.3] représente une vue en plan de dessus de la partie antérieure de l'allume-feu.

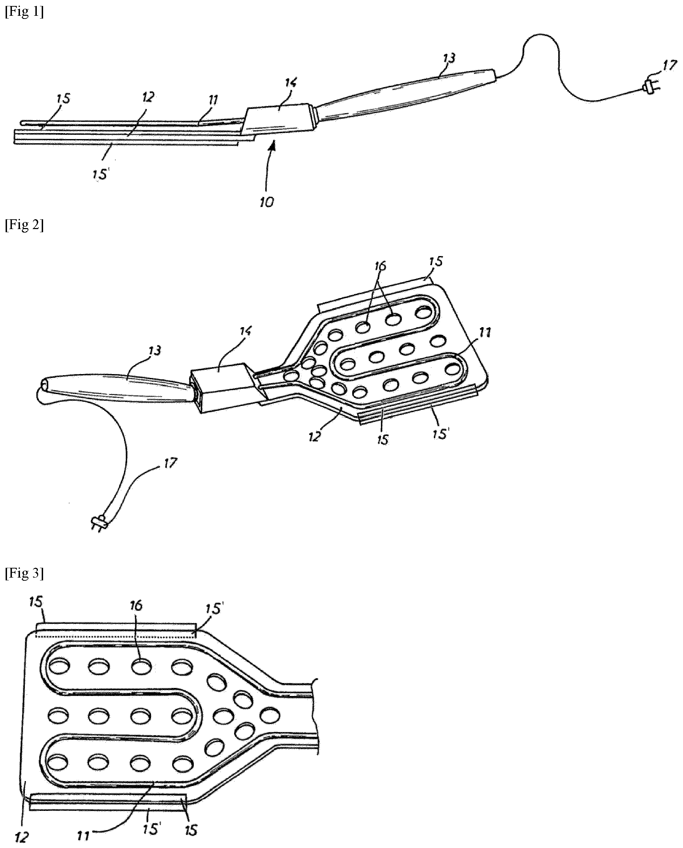

En référence aux figures 1 à 3, l'allume-feu électrique représenté comporte une structure rigide 10 servant de support à un corps de chauffe 11 à résistance électrique.

Cette structure rigide se compose essentiellement d'une plaque d'appui 12 sensiblement rectangulaire, et d'une manche 13 qui prolonge cette plaque d'appui.

La plaque d'appui 12 a une forme coudée de pelle et est réalisée en un matériau réfractaire tel que par exemple de la fonte.

Entre la plaque d'appui 12 rectangulaire et le manche 13, est disposé un boîtier 14 qui assure d'une part la liaison entre cette plaque d'appui et le manche et permet de fixer le corps de chauffe 11, et d'autre part permet de loger la connexion électrique de la résistance.

Par ailleurs, ce boîtier peut contenir une minuterie (non représentée) destinée à régler la durée d'un cycle de fonctionnement de l'appareil, afin d'éviter que celui-ci soit chauffé à la fois par la résistance et par le feu pendant une durée prolongée.

Le long de chacun de ses deux bords panallèles les plus longs, la plaque d'appui 12 rectangulaire est pourvue de retours latéraux 15 et 15' qui ont pour but respectivement, de maintenir le corps de chauffe 11 à une distance sensiblement constante de cette plaque d'appui, et de maintenir un écart entre la paroi inférieure de la plaque d'appui et le sol.

Plus précisément, les deux bords parallèles les plus longs de la plaque d'appui 12 sont chacun prolongés, d'une part par un retour latéral 15, dit supérieur, et d'autre part par un retour latéral 15', dit inférieur.

L'invention est caractérisée en ce que_les retours latéraux sont constitués d'une pièce métallique d'un seul tenant qui est fixée par soudure sur chacun des deux bords parallèles les plus longs de la plaque d'appui 12.

Les dimensions de cette pièce sont définies de telle sorte qu'une fois soudée sur la plaque 12, elle présente une zone débordant au dessus de la surface de ladite plaque pour former les retours latéraux supérieurs 15 et de la même manière, une zone débordant de ladite surface de la plaque 12 vers le bas, pour former les retours latéraux inférieurs 15'.

Par supérieur ou vers le haut, on entend le plan situé au dessus de la plaque 12, à l'opposé du foyer, lorsque le dispositif est disposé à prêt à l'usage dans le plan horizontal.

Par inférieur ou vers le bas, on entend le plan situé en dessus de la plaque 12, en regard du foyer.

Cette modalité permet d'une part d'éviter une opération de pliage de la plaque 12 vers le haut ou vers le bas, qui nécessiterait l'apposition d'une pièce complémentaire pour former le deuxième repli dans le sens opposé. Cette modalité permet par ailleurs en fonction des dimensions du foyer ou du combustible à traiter de définir plusieurs gammes de l'appareil d'allumage présentant des rebords latéraux plus ou moins larges en fonction des besoins.

Le corps de chauffe 11 comporte extérieurement un élément tubulaire rigide, replié de façon à former une double boucle et à présenter quatre segments rectilignes sensiblement parallèles entre eux. L'élément tubulaire est de préférence en métal réfractaire inoxydable. D'une manière connue, il peut contenir une résistance électrique formée par un fil métallique noyé dans une poudre réfractaire telle que la magnésie.

Bien que cela ne soit pas indispensable au bon fonctionnement du dispositif, la plaque d'appui 12 comporte avantageusement des ouvertures 16 qui diminuent son poids et facilitent la ventilation des combustibles solides déposés sur l'allume-feu en service, par exemple si la plaque repose sur une grille, sur des chenets ou sur un fond de foyer nervuré.

Pour allumer le feu, l'utilisateur dispose la pelle dans le foyer puis dispose le combustible solide, qui peut être par exemple du bois, transversalement sur les retours latéraux supérieurs 15.

Le combustible est ainsi placé directement en regard du corps de chauffe, mais sans jamais entrer en contact avec lui.

Le raccordement électrique étant effectué au moyen d'un cordon muni d'une prise de courant 17, le corps de chauffe est échauffé par effet Joule, devient rouge et provoque l'incandescence du combustible solide.

Pour les allume-feu qui comportent une minuterie logée dans le boîtier 14, le cycle de fonctionnement normal est par exemple limité à deux minutes.

Si ce cycle de fonctionnement a été insuffisamment long pour permettre au feu de prendre convenablement, l'utilisateur laisse l'allume feu en place et l'enclenche pour un deuxième cycle de fonctionnement.

Une fois que le combustible solide est enflammé, l'utilisateur peut retirer l'allume-feu en le saisissant par le manche 13 et en inclinant la plaque 12 de façon à la débarrasser du combustible.

Ainsi, le corps de chauffe 11 peut être éloigné du brasier pour éviter qu'il soit soumis à des contraintes thermiques qui limiteraient fortement sa durée de vie.

Les retours latéraux inférieurs 15' forment un piétement qui permet de placer l'allume feu dans le foyer sans que la plaque d'appui 12 ne repose directement sur la surface du foyer.

Ils permettent d'assurer un espacement constant, pendant toute la durée d'utilisation de l'allume feu, entre la surface du foyer et la paroi inférieure de la plaque d'appui 12, et ainsi de permettre une ventilation par circulation d'air dans ce volume, ce qui accélérera le processus d'embrasement du combustible.

Liste des repères numériques
- 10: Structure rigide
- 11: Corps de chauffe
- 12: Plaque d'appui
- 13: Manche
- 14: Boîtier
- 15: Retour latéral haut
- 15': Retour latéral bas
- 16: Ouvertures
- 17: Cordon

## Revendications

1. Allume-feu électrique, comportant une structure sur laquelle est monté au moins un corps de chauffe tubulaire (11) à résistance électrique ayant une face supérieure destinée à être mise en regard d'un combustible pendant un temps suffisant pour en provoquer l'incandescence, ladite structure comportant, en dessous du corps de chauffe (11), une plaque d'appui (12) sensiblement rectangulaire, les deux bords parallèles les plus longs de la plaque d'appui (12) étant chacun prolongés, d'une part par un retour latéral (15) supérieur, et d'autre part par un retour latéral (15') inférieur, lesdits retours latéraux inférieurs formant un piètement pour maintenir une distance minimale entre le foyer et ladite plaque d'appui et assurer une circulation d'air, et lesdits retours latéraux supérieurs permettant de positionner transversalement des éléments de combustible solides sans contact avec le corps de chauffe, les retours latéraux (15,15') étant constitués d'une pièce métallique d'un seul tenant qui est fixée à angle droit par soudure sur chacun des deux bords parallèles les plus longs de la plaque d'appui (12), les dimensions de cette pièce étant définies de telle sorte qu'une fois soudées sur la plaque (12), elle présente une zone débordant au dessus de la surface de ladite plaque pour former le retour latéral supérieur (15) et de la même manière, une zone débordant de ladite surface de la plaque (12) vers le bas, pour former le retour latéral (15') inférieur.

## Patentansprüche

1. Elektrischer Feueranzünder, umfassend eine Struktur, auf der mindestens ein rohrförmiger Heizkörper (11) mit elektrischem Widerstand montiert ist, dessen Oberseite dazu bestimmt ist, für eine ausreichende Zeit gegenüber einem Brennstoff platziert zu werden, um ihn zum Glühen zu bringen, wobei die Struktur Folgendes umfasst, unterhalb des Heizkörpers (11), eine im Wesentlichen rechteckige Trägerplatte (12), wobei die beiden längsten parallelen Kanten der Trägerplatte (12) jeweils verlängert sind, einerseits durch einen oberen seitlichen Rücksprung (15), und andererseits durch eine untere seitliche Rückführung (15'), wobei die unteren seitlichen Rückführungen eine Basis bilden, um einen Mindestabstand zwischen dem Herd und der Trägerplatte aufrechtzuerhalten und die Luftzirkulation zu gewährleisten, und wobei die oberen seitlichen Rückführungen die Positionierung von Festbrennstoff ermöglichen Elemente in Querrichtung ohne Kontakt mit dem Heizkörper, wobei die seitlichen Rückführungen (15, 15') aus einem einzigen Metallstück bestehen, das im rechten Winkel durch Schweißen an jeder der beiden längsten parallelen Kanten der Trägerplatte (12) befestigt ist, wobei die Abmessungen dieses Teils so definiert sind, dass es, sobald es mit der Platte (12) verschweißt ist, einen Bereich aufweist, der über die Oberfläche der Platte hinausragt, um den oberen seitlichen Rücksprung (15) zu bilden, und in gleicher Weise einen Bereich, der von dieser hervorsteht Oberfläche der Platte (12) nach unten, um den seitlichen Rücksprung (15') tiefer zu bilden.

## Claims

1. Electric fire lighter, comprising a structure on which is mounted at least one tubular heating body (11) with electrical resistance having an upper face intended to be placed opposite a combustible material for a time sufficient to cause it incandescence, said structure comprising, below the heating body (11), a substantially rectangular support plate (12), the two longest parallel edges of the support plate (12) each being extended, on the one hand by an upper lateral return (15), and on the other hand by a lower lateral return (15'), said lower lateral returns forming a base to maintain a minimum distance between the hearth and said support plate and ensure air circulation, and said upper lateral returns making it possible to position solid combustible elements transversely without contact with the heating body, the lateral returns (15, 15') being made up of a single piece of metal which is fixed at right angles by welding on each of the two longest parallel edges of the support plate (12), the dimensions of this part being defined such that once welded to the plate (12), it presents a zone projecting above the surface of said plate to form the upper lateral return (15) and in the same way, a zone projecting from said surface of the plate (12) downwards, to form the lower lateral return (15' ).
